Europäisches Patentamt

European Patent Office

Office européen des brevets

(11) Veröffentlichungsnummer: **0 270 978**
**A2**

## (12) EUROPÄISCHE PATENTANMELDUNG

(21) Anmeldenummer: 87117714.3

(51) Int. Cl.⁴: **H04J 3/06**

(22) Anmeldetag: 30.11.87

(30) Priorität: 11.12.86 DE 3642392

(43) Veröffentlichungstag der Anmeldung:
15.06.88 Patentblatt 88/24

(84) Benannte Vertragsstaaten:
AT BE CH DE FR GB IT LI NL SE

(71) Anmelder: **Siemens Aktiengesellschaft Berlin und München**
**Wittelsbacherplatz 2**
**D-8000 München 2(DE)**

(72) Erfinder: **Ballweg, Adolf, Dipl.-Ing.**
**Klessheimer Weg 14**
**D-8034 Germering(DE)**

(54) **Verfahren und Anordnung zum Ein- und Auslesen von paketorientierten Datensignalen in einen Pufferspeicher.**

(57) Das neue Verfahren soll das datenbittaktgetaktete Einlesen und das verarbeitungsbittaktgetaktete Auslesen paketorientierter Datensignale in bzw. aus einen Pufferspeicher eines Kommunikationsterminals paketbezogen und zum frühesten Zeitpunkt ermöglichen.

Nach dem Feststellen einer Paketanfangsbitkombination (pab) in ankommenden, paketorientierten Datensignalen (d) wird das Einlesen der Datensignale (d) in den Pufferspeicher (PS) und nach einer vorgegebenen Verzögerungszeit das Auslesen der Datensignale (d) initialisiert und nach dem Feststellen einer Paketendebitkombination (peb) und/oder einer füllinformationsanzeigenden Bitkombination (pfb) am Dateneingang (PSE) des Pufferspeichers (PS) das Einlesen der Datensignale (d) beendet. Nach dem Feststellen einer Paketendebitkombination (peb) oder einer füllinformationsanzeigenden Bitkombination (pfb) am Datenausgang (PSA) des Pufferspeichers (PS) oder bei Gleichheit der Ein-und Ausleseadresse, vorausgesetzt am Datenausgang (PSA) des Pufferspeichers (PS) wurde eine Paketendebitkombination (peb) und/oder eine füllinformationsanzeigende Bitkombination (pfb) festgestellt, wird das Auslesen beendet.

Verfahren und Anordnung dienen dem Phasen-und Taktfrequenzausgleich zwischen dem Datenbittakt der ankommenden Datensignale (d) und dem Verarbeitungstakt eines Kommunikationsterminals, z.B. eines ringförmigen Netzes.

FIG 1

EP 0 270 978 A2

## Verfahren und Anordnung zum Ein-und Auslesen von paketorientierten Datensignalen in einen Pufferspeicher

Die Erfindung betrifft ein Verfahren zum Steuern des Ein-und Auslesens von auf einem Netzwerk paketorientiert mit einer festgelegten maximalen Anzahl von Bits je Paket seriell oder parallel übertragenen Datensignalen in einen mit Datenein-und -ausgang versehenen zyklisch speicherplatzadressierbaren Pufferspeicher einer über eine Netzzugriffssteuerung mit dem Netzwerk verbundenen Station, deren Verarbeitungstaktfrequenz annähernd der seriellen oder parallelen Datenbittaktgeschwindigkeit entspricht, wobei in das Datenpaket eine Paketanfangsbitkombination sowie eine Paketendebitkombination und/oder zwischen die Datenpakete füllinformationsanzeigende Bitkombinationen einfügbar sind und die Größe des Pufferspeichers auf die maximale Abweichung zwischen Verarbeitungstaktfrequenz und Datenübertragungsgeschwindigkeit sowie auf den maximal auftretenden Jitter abgestimmt ist.

In der Nachrichten-und der Datenverarbeitungstechnik findet in zunehmendem Maße an den Übergabe-bzw. Schnittstellen zwischen den Systemen, Systemkomponenten, usw. - beispielsweise zwischen zwei an ein öffentliches oder privates Netz angeschlossenen Teilnehmerstationen - ein Austausch von digitalen Datensignalen statt. Die von einem System zu einem anderen System übermittelten und dort empfangenen Datensignale stimmen hinsichtlich Bittaktfrequenz und Phasenlage meistens nicht mit der Bittaktfrequenz und Phasenlage des Verarbeitungstaktes des empfangenden Systems überein. Verursacht werden diese Abweichungen überwiegend durch die Taktfrequenzabweichungen der in den Systemen implementierten Taktoszillatoren. Erfordert die Entfernung zwischen den beiden Systemen eine Übertragung der Datensignale mittels üblicher Übertragungstechnik, so können - verursacht z. B. durch Störspannungseinflüsse, Einschwingvorgänge in Synchronisier einrichtungen, usw. - die Bittaktfrequenzabweichungen geringfügig und die Phasenschwankungen - auch mit Jitter bezeichnet - erheblich zunehmen. Der Jitter wird im allgemeinen als Phasenschwankung um die Kennzeitpunkte eines digitalen Signals bzw. um die idealen, äquidistanten Zeitpunkte definiert. Eine Möglichkeit, die Bittaktfrequenz und die Phasenlage der Datensignale an die des Verarbeitungstaktes des empfangenden Systems anzupassen, stellt das Einfügen eines Pufferspeichers zwischen der Übergabestelle und den weiterverarbeitenden Systemkomponenten dar. Die empfangenen Datensignale werden hierbei mittels des aus den Datensignalen abgeleiteten Datenbittaktes in den Pufferspeicher eingelesen und nach einer auf die maximale Taktfrequenz und Phasenabweichung abgestimmten vorgegebenen Zeit mittels des Verarbeitungssystemtaktes wieder aus dem Pufferspeicher ausgelesen. Das Ein-und Auslesen erfolgt üblicherweise durch speicherplatzadreßgenerierende und einlese-und auslesesignalerzeugende Einrichtungen, mittels der die Einlese-, Auslese-und Adresseneingänge des Pufferspeichers angesteuert werden. Initialisiert wird der Einlese-bzw. Auslesevorgang meist durch eine spezielle Initialisierungsprozedur, die vor dem Einlese-bzw. Auslesevorgang abläuft. Derartig gesteuerte Pufferspeicher sind beispielsweise aus Zeitmultiplex-Datenübertragungssystemen, insbesondere PCM-Übertragungssysteme, oder aus Zugangseinrichtungen von Datenverarbeitungsanlagen bekannt, wobei die Datensignale auch parallel vorliegen dürfen und die Anpassung dann in einem Parallel-z. B. 1-Byte-Pufferspeicher erfolgt. Die Einführung der paketorientierten Datenübermittlungs-bzw. -verarbeitungstechnik und damit das stoßweise bzw. paketweise Übermitteln von Datensignalen erfordern bei gleichzeitiger Berücksichtigung weiter steigender Übermittlungsgeschwindigkeiten der Datensignale auf diese Technik abgestimmte Initialisierungs-und Beendigungsprozeduren der Einlese-und Auslesevorgänge des Pufferspeichers. Den Beginn bzw. das Ende eines einzelnen Datenpaketes bestimmt eine vorgegebene Paketanfangs-bzw. Paketendebitkombination. Zwischen den einzelnen Datenpaketen können - um z. B. Betriebs-oder Ausfallzustand zu erkennen - füllinformationsanzeigende Bitkombinationen eingefügt werden.

Der Erfindung liegt die Aufgabe zugrunde, ein Verfahren anzugeben, mit dem das Einlesen bzw. das Auslesen von paketorientierten, seriell oder parallel vorliegenden Datensignalen in einen speicherplatzadressierbaren Pufferspeicher paketbezogen zum frühestmöglichsten Zeitpunkt initialisiert und beendet wird. Die Aufgabe wird ausgehend von dem eingangs beschriebenen Verfahren durch die kennzeichnenden Merkmale des Anspruches 1 gelöst.

Der mit der Erfindung erzielbare Vorteil liegt insbesondere darin, daß das Ein-bzw. Auslesen zum frühestmöglichsten Zeitpunkt nach dem sicheren Erkennen eines Paketanfanges bzw. Paketendes - aufgrund der Auswertung der Paketanfangsbitkombination bzw. der Paketendebitkombination - initialisiert bzw. beendet wird.

Außerdem wird der Einlese-bzw. der Auslesevorgang auf die Dauer eines Paketes beschränkt. Hierdurch kann die Größe des Pufferspeichers erheblich reduziert werden, da nur die in einer relativ kurzen Paketdauer - im Verhältnis zu kontinuierlich zu übertragenden Datensignalen, z. B. in Zeitmultiplexsystemen -auftretenden Bittaktfrequenz-und Phasenabweichungen ausgeglichen werden müssen. Dies gilt auch für Datenpakete, zwischen denen füllinformationsanzeigende Bitkombinationen eingefügt sind. Hierbei wird das Einlesen der Datensignale in den Pufferspeicher und das Auslesen der Datensignale aus dem Pufferspeicher jeweils nach dem Erkennen einer die füllinformationsanzeigenden Bitkombination beendet und anschließend der zuletzt adressierte und die füllinformationsanzeigende Bitkombination enthaltende Speicherplatz - siehe Anspruch 2 - kontinuierlich solange ausgelesen, bis ein weiteres ankommendes Datenpaket die Einlese-bzw. Auslesevorgänge neu initialisiert bzw. beendet. Das Auslesen der Datensignale aus dem Pufferspeicher wird beendet, wenn entweder eine Paketendebitkombination oder eine füllinformationsanzeigende Bitkombination am Datenausgang des Pufferspeichers festgestellt wird oder wenn die Speicherplatzadresse der zuletzt eingelesenen Datensignale mit der Speicherplatzadresse der aktuell ausgelesenen Datensignale übereinstimmt, vorausgesetzt am Dateneingang des Pufferspeichers wurde eine Paketendebitkombination oder eine füllinformationsanzeigende Bitkombination festgestellt. Die in den Ansprüchen 3 und 4 beanspruchten beiden Anordnungen zum Durchführen des Verfahrens beziehen sich auf die vorstehend erwähnte Alternative hinsichtlich des Beendens des Auslesens der Datensignale aus dem Pufferspeicher.

Die vorteilhaften Weiterbildungen der Erfindung gemäß der Patentansprüche 5 bis 7 zeigen Realisierungsmöglichkeiten der Anordnungen zum Durchführen des erfindungsgemäßen Verfahrens. Diese Realisierungsmöglichkeiten sind insofern auf einen Einsatz des Verfahrens in Netzen - z. B. ringförmige Netze - abgestimmt, als die einzelnen Komponenten, wie Pufferspeicher, Ein-und Ausleseeinrichtung und Vergleicher mittels integrierter und mit hohen Taktgeschwindigkeiten - größer 10 MHz - operierenden Schaltkreisen realisierbar sind.

Im folgenden werden zwei Ausführungsbeispiele der Erfindung anhand von Zeichnungen näher erläutert. Dabei zeigen

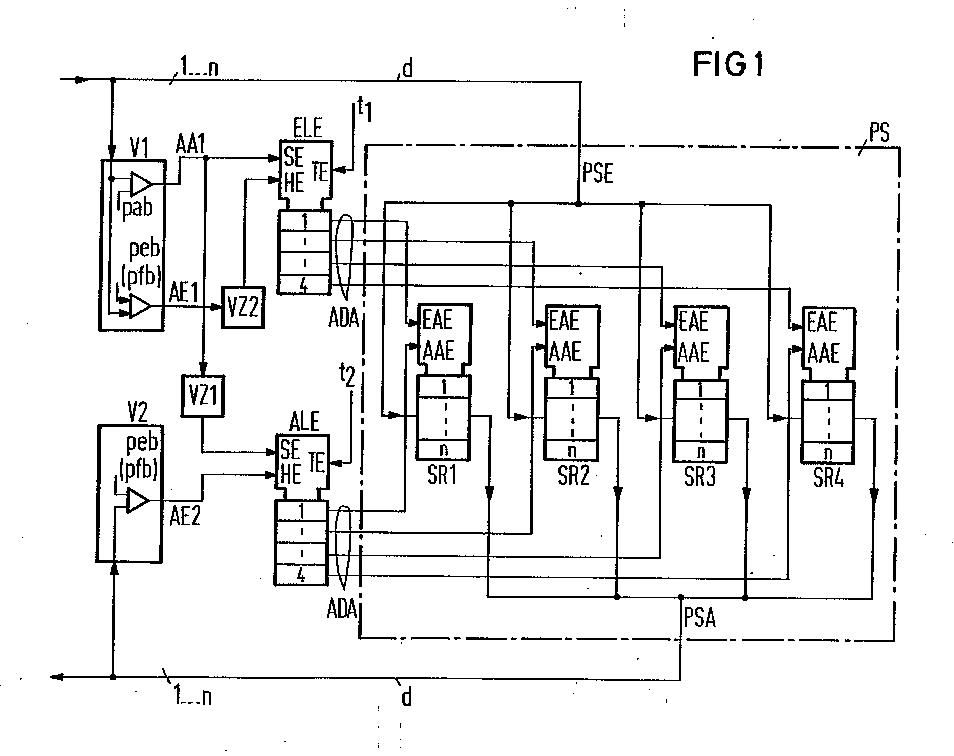

Fig. 1 ein Blockschaltbild der Anordnung zum Durchführen des Verfahrens, bei dem das Auslesen des Pufferspeichers nach dem Feststellen des Vorhandenseins einer paketende-oder füllinformationsanzeigenden Bitkombination beendet wird und

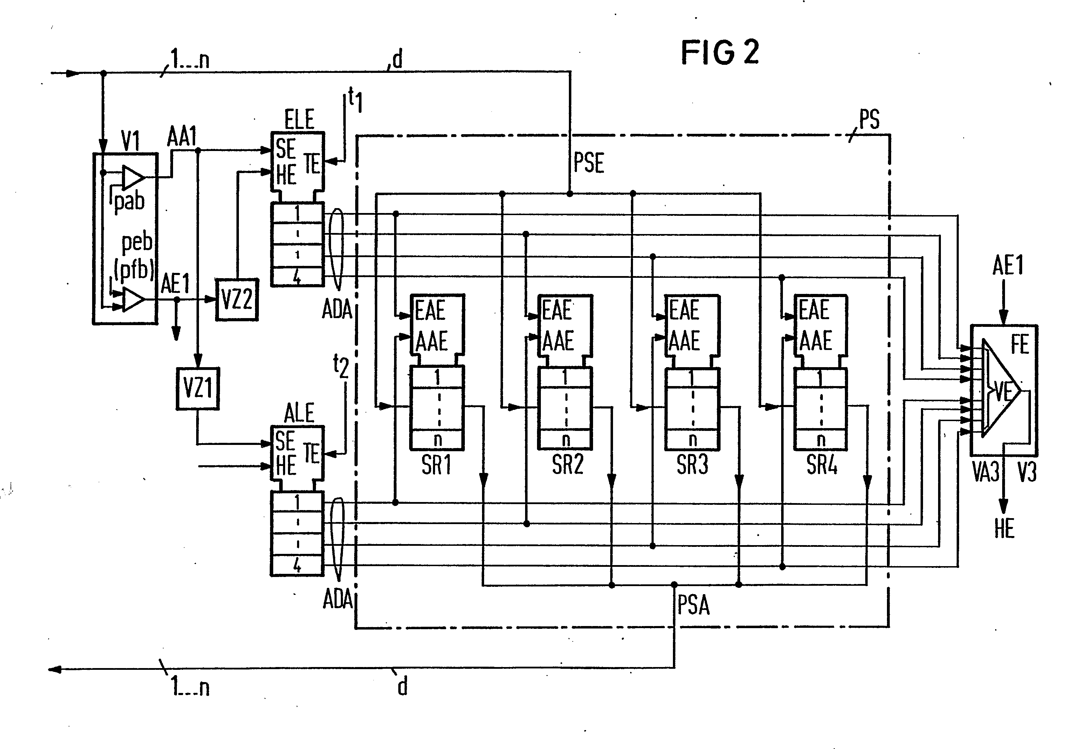

Fig. 2 ein Blockschaltbild der Anordnung zum Durchführen des Verfahrens, bei dem das Auslesen des Pufferspeichers beendet wird, wenn die Speicherplatzadresse der zuletzt eingelesenen Datensignale mit der Speicherplatzadresse der aktuell ausgelesenen Datensignale übereinstimmt, vorausgesetzt am Dateneingang des Pufferspeichers wurde eine Paketendebitkombination oder eine füllinformationsanzeigende Bitkombination festgestellt.

Fig. 1 zeigt einen aus vier Schieberegistern SR1...SR4 gebildeten Pufferspeicher PS, wobei jedes Schieberegister SR seriell hi tereinandergeschaltete Register enthält. Ein solches Schieberegister SR kann beispielsweise mittels eines integrierten Schaltkreises SN 74 AS 821 - zehn seriell geschaltete Register enthaltend - der Fa. Texas Instruments realisiert werden. Dieser integrierte Schaltkreis enthält des weiteren einen Einlese-und einen Ausleseadreßeingang EAE, AAE. Ein positiver Flankenwechsel eines Eingangssignal am Einleseadreßeingang EAE bewirkt das gleichzeitige Einlesen der an den zehn Registereingängen vorliegenden Datensignale d. Analog hierzu bewirkt ein positiver Flankenwechsel am Ausleseadreßeingang AAE des Schieberegisters SR ein gleichzeitiges Auslesen der jeweils in den Registern vorliegenden Information an den jeweiligen Ausgang der Register. Jeder der Dateneingänge der Schieberegister SR ist mit den die gleiche Ordnungszahl 1...n aufweisenden Dateneingängen aller Schieberegister verbunden. Analog hierzu sind alle Datenausgänge der Schieberegister SR untereinander verbunden. Die so untereinander verbundenen Dateneingänge bzw. Datenausgänge stellen somit einen 10 Bit-Parallel-Dateneingang PSE und einen 10 Bit-Parallel-Datenausgang PSA des Pufferspeichers PS dar. Um eine gegenseitige Beeinflussung der Datenausgänge der Schieberegister SR zu vermeiden, sind diejenigen Datenausgänge der Schieberegister SR, die sich nicht in einem Auslesezustand befinden, inaktiv bzw. potentialfrei geschaltet.

Jeder Einleseadreßeingang EAE der Schieberegister SR ist über eine entsprechende Verbindung zu einem mit gleicher Ordnungszahl versehenen Adressenausgang ADA einer Einleseeinrichtung ELE geführt. Die Einleseeinrichtung ELE ist mittels eines aus vier hintereinandergeschalteten Registern gebildeten Schieberegisters realisiert. Das die Einleseeinrichtung ELE repräsentierende Schieberegister weist des weiteren einen Starteingang SE und einen Halteeingang HE sowie einen Takteingang TE auf. Dem Takteingang TE werden Taktsignale t1 zugeführt, deren Bittaktfrequenz von den am Pufferspeichereingang PSE ankommenden Datensignalen d abgeleitet ist. Die nicht dargestellten Dateneingänge der Einleseeinrichtung ELE sind in der Art beschaltet, daß nach Anlegen einer Startinformation am Starteingang SE der Einleseeinrichtung ELE die Datenausgänge bzw. Adreßausgänge ADA in einer vorgegebenen, sich ständig wiederholenden Reihenfolge eine das Auslesen der jeweils angesteuerten Schieberegister SR bewirkende Information aufweisen. Jeder Ausleseadreßeingang AAE der Schieberegister SR des Pufferspeichers PS ist mit einem Datenausgang bzw. Adreßausgang ADA einer Ausleseeinrichtung ALE verbunden. Diese Ausleseeinrichtung ALE ist wiederum mittels eines Schieberegisters, das aus vier hintereinandergeschalteten

3

Registern gebildet wird, realisiert. Auch hier sind die Eingänge des Schieberegisters derart beschaltet, daß an den Adreßausgängen ADA in einer vorgegebenen, sich ständig wiederholenden Reihenfolge eine das Auslesen eines Schieberegisters SR des Pufferspeichers PS bewirkende Information anliegt. Ebenso weist das die Ausleseeinrichtung ALE repräsentierende Schieberegister einen Start-und einen Halteeingang SE, HE sowie einen Takteingang TE auf. Diesem Takteingang TE wird ein Taktsignal t2 zugeführt, das einem Verarbeitungstaktsignal einer die Datensignale d weiterverarbeitenden Einrichtung entspricht.

Die n-polige, mit dem Pufferspeichereingang PSE verbundene Datenleitung - in diesem Ausführungsbeispiel mit n = 10 gewählt -ist zusätzlich auf einen n-poligen Eingang eines ersten Vergleichers V1 geführt. In diesem ersten Vergleicher V1 werden die ankommenden Datensignale d auf das Vorhandensein einer Paketanfangs-und einer Paketendebitkombination pab, peb hin untersucht. Wird eine Paketanfangsbitkombination pab festgestellt, so liegt an einem den Paketanfang anzeigenden Ausgang AA1 eine diesen Zustand repräsentierende Information an. Analog hierzu liegt an einem das Paketende anzeigenden Ausgang AE1 beim Feststellen einer Paketendebitkombination peb eine diesen Zustand repräsentierende Information an. Der einen Paketanfang anzeigende Ausgang AA1 ist mit dem Starteingang der Einleseeinrichtung ELE verbunden und über eine erste Verzögerungseinrichtung VZ1 auf den Starteingang SE der Ausleseeinrichtung ALE geführt. Der ein Paketende anzeigende Ausgang AE1 des ersten Vergleichers V1 ist zu einem Eingang einer zweiten Verzögerungseinrichtung VZ2 geführt, deren Ausgang mit dem Halteeingang HE der Einleseeinrichtung ELE verbunden ist. Der n-polige - in diesem Ausführungsbeispiel mit n = 10 bereits bestimmt - Datenausgang PSA des Pufferspeichers PS ist mit einem n-poligen Eingang eines zweiten Vergleichers V2 sowie mit einer nicht dargestellten, die Datensignale d weiterverarbeitenden Einrichtung verbunden. In diesem zweiten Vergleicher V2 werden die am Datenausgang PSA des Pufferspeichers PS vorliegenden Datensignale d auf das Vorhandensein einer Paketendebitkombination peb hin untersucht. Das Feststellen einer solchen Paketendebitkombination peb wird an einem Ausgang AE2 des zweiten Vergleichers V2 durch Abgeben einer diesen Zustand repräsentierenden Information signalisiert. Der das Paketende anzeigende Ausgang AE2 des zweiten Vergleichers V2 ist auf den Halteeingang HE der Ausleseeinrichtung ALE geführt.

Die beispielsweise in einem ringförmigen Netz seriell übermittelten, paketorientierten und mit Paketanfangs-und Paketendebitkombination pab, peb versehenen Datensignale d gelangen über eine nicht dargestellte Serien-Parallel-Umsetzeinrichtung an den 10 Bit-Parallel-Dateneingang PSE des Pufferspeichers PS und an den Eingang des ersten Vergleichers V1. Gleichzeitig mit dem Erkennen einer Paketanfangsbitkombination pab wird über den einen Paketanfang anzeigenden Ausgang AA1 des ersten Vergleichers V1 und den Starteingang SE der Einleseeinrichtung ELE das Einlesen der Paketanfangsbitkombination pab und der folgenden Datensignale d in den Pufferspeicher PS mit einem der vier Schieberegister SR beginnend, initialisiert. Nach einer in der ersten Verzögerungseinrichtung VZ1 vorgegebenen Verzögerungszeit wird über den Starteingang SE der Ausleseeinrichtung ALE das Auslesen der in den Pufferspeicher PS eingelesenen Datensignale d initialisiert. Diese erste Verzögerungszeit ist auf die Pufferspeichergröße und damit auf die maximale Abweichung des von den Datensignalen d abgeleiteten Datenbittaktes t1 und eines internen Verarbeitungstaktes t2 - verursacht durch Taktoszillatorabweichungen und Jitter - abgestimmt. Nach dem Feststellen der Paketendebitkombination peb im ersten Vergleicher V1 wird über den ein Paketende anzeigenden Ausgang AE1 dieses Vergleichers V1 und über eine zweite Verzögerungseinrichtung VZ2 der Halteeingang HE der Einleseeinrichtung ELE angesteuert, wodurch der Einlesevorgang nach dem Einlesen der Paketendebitkombination peb beendet wird. Die zweite Verzögerungszeit ist erforderlich, um ein sicheres Einlesen der Paketendebitkombination peb zu gewährleisten. Gelangt nun diese Paketendebitkombination peb an den Datenausgang PSA des Pufferspeichers PS, so wird in dem zweiten Vergleicher V2 das Vorhandensein dieser Paketendebitkombination peb festgestellt und über dessen Ausgang AE2 und den Halteeingang HE der Ausleseeinrichtung ALE das Auslesen des Pufferspeichers PS beendet. Sind zwischen den einzelnen Datenpaketen füllinformationsanzeigende Bitkombinationen pfb eingefügt, so können sowohl im ersten als auch im zweiten Vergleicher V1, V2 die Datensignale d auf das Vorhandensein dieser Bitkombination hin untersucht werden. Der Vorteil dieser Variante liegt darin, daß nach dem Einlesen und Auslesen der Datensignale d am Datenausgang PSA des Pufferspeichers PS eine die Füllinformation anzeigende Bitkombination anliegt und somit ständig an die weiterverarbeitende Einrichtung weitergeleitet wird. Diese füllinformationsanzeigende Bitkombination liegt solange an, bis eine weitere Paketanfangsbitkombination pab erkannt und ein neuer Einlese-bzw. Auslesevorgang initialisiert bzw. beendet wird.

Fig. 2 zeigt einen gleichartig mit gleicher integrierter Schaltungstechnik aufgebauten Pufferspeicher PS, eine Einleseeinrichtung ELE, eine Ausleseeinrichtung ALE und einen ersten Vergleicher V1. Sowohl die Verbindungen zwischen diesen Komponenten als auch die Funktionen der einzelnen Komponenten entsprechen den in Fig. 1 dargestellten bzw. erläuterten Verbindungen und Funktionen. Anstelle des zweiten Vergleichers V2 tritt ein dritter Vergleicher V3, an dessen Eingänge sowohl die Adreßausgänge ADA der Einleseeinrichtung ELE als auch die Adreßausgänge ADA der Ausleseeinrichtung ALE geführt sind. Zusätzlich ist der das Paketende anzeigende Ausgang AE1 des ersten Vergleichers V1 mit einem weiteren· Freigabeeingang FE des dritten Ver gleichers V3 verbunden. In diesem Vergleicher V3 wird bei Gleichheit der Informationen auf den Adreßausgängen ADA der Einleseeinrichtung ELE und der Ausleseeinrichtung ALE unter der Voraussetzung, daß eine Paketendebitkombination peb oder füllinformationsanzeigende Bitkombination pfb erkannt wurde, ein Haltesignal erzeugt und über einen Ausgang VA3 des dritten Vergleichers V3 dem Halteeingang HE der Ausleseeinrichtung ALE zugeführt. Dies bedeutet, daß der Pufferspeicher PS solange ausgelesen wird, bis die zuletzt für das Einlesen der Datensignale d erzeugte Speicherplatzadresse der aktuellen Auslese-Speicherplatzadresse entspricht, vorausgesetzt, eine Paketendebitkombination peb oder füllinformationsanzeigende Bitkombination pfb wurde im ersten Vergleicher V1 festgestellt und dieser Zustand dem dritten Vergleicher V3 mitgeteilt.

Realisierungsmöglichkeiten der in Fig. 1 und Fig. 2 dargestellten Systemkomponenten:

```
Pufferspeicher PS:           SN 74 AS 821      Schaltkreis der Fa.
                                               Texas Instruments


Einlese- und Auslese-
einrichtung ELE, ALE:        74 F 194

                                               Schaltkreise der
                                               Advanced Schottky
Vergleicher V1, V2, V3:      74 F 521          TTL-Technik von
                                               Fairchild

Verzögerungseinrichtungen
VZ1, VZ2:                    74 F 109
```

## Ansprüche

1. Verfahren zum Steuern des Ein-und Auslesens von auf einem ringförmigen Netzwerk paketorientiert mit einer festgelegten maximalen Anzahl von Bits je Paket seriell oder parallel übertragenen Datensignalen in einen mit Datenein-und ausgang versehenen zyklisch speicherplatzadressierbaren Pufferspeicher einer über eine Netzzugriffssteuerung mit dem Netzwerk verbundenen Station, deren Verarbeitungstaktfrequenz annähernd der seriellen oder parallelen Datenbittaktgeschwindigkeit entspricht, wobei in das Datenpaket eine Paketanfangsbitkombination sowie eine Paketendebitkombination und/oder zwischen die Datenpakete füllinformationsanzeigende Bitkombinationen einfügbar sind und die Größe des Pufferspeichers auf die maximale Abweichung zwischen Verarbeitungstaktfrequenz und Datenübertragungsgeschwindigkeit sowie auf den maximal auftretenden Jitter abgestimmt ist,

**dadurch gekennzeichnet,**

-daß das speicherplatzadressengesteuerte, datenbittaktgetaktete Einlesen der seriellen oder parallelen Datensignale (d) in den Pufferspeicher (PS) nach dem Feststellen des Vorhandenseins einer Paketanfangsbitkombination (pab) am Dateneingang (PSE) des Pufferspeichers (PS) initiiert und nach dem Feststellen des Vorhandenseins einer Paketendebitkombination (peb) oder einer füllinformationsanzeigenden Bitkombination (pfb) beendet wird,

-daß das speicherplatzadressengesteuerte, verarbeitungstaktgetaktete Auslesen der Datensignale (d) aus dem Pufferspeicher (PS) nach einer vorgegebenen, annähernd die Hälfte der Taktschritte eines die Adressierung aller Speicherplätze umfassenden Pufferspeicherzyklus repräsentierenden, zeitlichen Verzögerung nach dem Feststellen des Vorhandenseins einer Paketanfangsbitkombination (pab) initiiert wird -und daß das speicheradressengesteuerte, verarbeitungstaktgetaktete Auslesen der Datensignale (d) aus dem Pufferspeicher (PS)

--entweder nach dem Feststellen des Vorhandenseins einer Paketendebitkombination (peb) und/oder füllinformationsanzeigenden Bitkombination (pfb) am Datenausgang (PSA) des Pufferspeichers (PS)

--oder in Abhängigkeit des Vorhandenseins einer Paketende-bitkombination (peb) oder füllinformationsanzeigenden Bitkombination (pfb) am Dateneingang (PSE) des Pufferspeichers (PS) nach dem Feststellen der Adressengleichheit der Pufferspeicheradresse der in den Pufferspeicher (PS) zuletzt eingelesenen Paketendebitkombination (peb) und/oder letzten füllinformationsanzeigenden Bitkombination (pfb) und der Pufferspeicheradresse des aktuell auszulesenden Pufferspeicherplatzes

beendet wird.

2. Verfahren nach Anspruch 1,
**dadurch gekennzeichnet,**
daß die Dateninformation des zuletzt adressierten Auslesespeicherplatzes kontinuierlich auslesbar ist.

3. Anordnung zum Durchführen des Verfahrens nach Anspruch 1,
**dadurch gekennzeichnet,**
daß eine serielle bzw. parallele Datensignale (d) führenden Datenleitung bzw. Datenleitungen mit dem Dateneingang bzw. Dateneingängen (PSE) eines Pufferspeichers (PS) und mit einem die Paketanfangs-und Paketendebitkombination (pab, peb) oder füllinformationsanzeigende Bitkombination (pfb) feststellenden ersten Vergleicher (V1) verbunden ist bzw. sind, daß ein den Paketanfang anzeigender Ausgang (AA1) des ersten Vergleichers (V1) mit einem Starteingang (SE) einer die Speicheradressen zyklisch generierenden Einleseeinrichtung (ELE) und über eine mit definierter Verzögerungszeit versehene erste Verzögerungseinrichtung (VZ1) mit einem Starteingang (SE) einer die Speicheradressen zyklisch generierenden Ausleseeinrichtung (ALE) verbunden ist, daß der ein das Paketende und/oder die Füllinformation anzeigender Ausgang (AE1) des ersten Vergleichers (V1) über eine zweite mit zweiter vorgegebener Verzögerungszeit versehene Verzögerungseinrichtung (VZ2) mit einem Stopeingang (HE) der Einleseeinrichtung (ELE) verbunden ist, daß serielle oder parallele Daten (d) aufweisende Datenausgänge (PSA) des Pufferspeichers (PS) untereinander und mit einem die Paketendebitkombination (peb) und/oder füllinformationsanzeigenden Bitkombination (pfb) feststellenden zweiten Vergleicher (V2) verbunden und zu weiterverarbeitenden Einrichtungen weiterführbar ist, daß ein das Paketende und/oder die Füllinformation anzeigender Ausgang (AE2) des zweiten Vergleichers (V2) mit einem Stopeingang (HE) der Ausleseeinrichtung (ALE) verbunden ist und daß die Adressenausgänge (ADA) der Einlese-bzw. Ausleseeinrichtung (ELE, ALE) zu Einlese-bzw. Ausleseadreßeingängen (EAE, AAE)·des Pufferspeichers (PS) geführt sind.

4. Anordnung zum Durchführen des Verfahrens nach Anspruch 1,
**dadurch gekennzeichnet,**
daß eine serielle bzw. parallele Datensignale (d) aufweisende Datenleitungen (DL) mit einem Dateneingang bzw. Dateneingängen (PSE) eines Pufferspeichers (PS) und mit einem die Paketanfangs-und Paketendebitkombination (pab, peb) oder füllinformationsanzeigende Bitkombination (pfb) feststellenden ersten Vergleicher (V1) verbunden ist bzw. sind, daß ein den Paketanfang anzeigender Ausgang (AA1) des ersten Vergleichers (V1) mit einem Starteingang (SE) einer die Speicheradressen zyklisch generierenden Einleseeinrichtung (ELE) und über eine mit definierter Verzögerungszeit versehene erstes Verzögerungseinrichtung (VZ1) mit einem Starteingang (SE) einer die Speicheradressen zyklisch generierenden Ausleseeinrichtung (ALE) verbunden ist, daß ein das Paketende und/oder die Füllinformation anzeigender Ausgang (AE) des ersten Vergleichers (V1) über eine zweite mit zweiter vorgegebener Verzögerungszeit versehene Verzögerungseinrichtung (VZ2) mit einem Stopeingang (HE) der Einleseeinrichtung (ELE) und andererseits mit einem Freigabeeingang (FE) eines dritten Vergleichers (V3) verbunden ist, dessen Vergleichseingänge (VE) je zur Hälfte mit Adreßausgängen (ADA) der Einleseeinrichtung (ELE) und der Ausleseeinrichtung (ALE) verbunden sind und dessen Vergleicherausgang (VA3) auf einen Stopeingang (HE) der Ausleseeinrichtung (ALE) geführt ist.

5. Anordnung nach einem der Ansprüche 3 oder 4,
**dadurch gekennzeichnet,**
daß die Vergleicher (V1, V2, V3) mittels bitvergleichender, integrierter Schaltkreise realisierbar sind.

6. Anordnung nach einem der Ansprüche 3 oder 4,
**dadurch gekennzeichnet,**
daß die Verzögerungseinrichtungen (VZ1, VZ2) mittels getakteter Register realisierbar sind.

7. Anordnung nach einem der Ansprüche 3 oder 4,
**dadurch gekennzeichnet,**
daß die Einlese-und Ausleseeinrichtungen (ELE, ALE) mittels getakteter Schieberegister realisierbar sind.

FIG 1

0 270 978

FIG 2